# EUROPÄISCHE PATENTSCHRIFT

(11) **EP 3 693 634 B1**
(45) Veröffentlichungstag und Bekanntmachung des Hinweises auf die Patenterteilung: **22.05.2024**
(21) Anmeldenummer: 20150961.9
(22) Anmeldetag: 09.01.2020
(51) Int. Cl.: F16H 57/04

(54) **ANTRIEBSSTRANG EINES FAHRZEUGES**
DRIVE TRAIN OF A VEHICLE
GROUPE MOTOPROPULSEUR D'UN VÉHICULE

(30) Priorität: 07.02.2019 DE 102019201586
(43) Veröffentlichungstag der Anmeldung: 12.08.2020
(73) Patentinhaber: VOLKSWAGEN AG, 38440 Wolfsburg (DE)
(72) Erfinder: Lamm, Eugen, 38448 Wolfsburg (DE); Becker, Björn, 38106 Braunschweig (DE)

(56) Entgegenhaltungen:
- EP-A1- 1 907 729
- EP-B1- 1 907 729
- US-A1- 2016 123 455

## Beschreibung

Die Erfindung betrifft einen Antriebsstrang eines Fahrzeuges, insbesondere eines Kraftfahrzeuges, gemäß der Merkmale des Oberbegriffes des Patentanspruches 1.

Im Stand der Technik sind eine Vielzahl von Antriebssträngen für Kraftfahrzeuge bekannt. Diese weisen zunächst eine Antriebswelle, ein Getriebe, ein Differential und mindestens eine Radantriebswelle auf. Hierbei läuft das Antriebsdrehmoment bzw. der Kraftfluss von dem Antriebsmotor (dies kann eine Verbrennungskraftmaschine oder auch ein Elektromotor sein) über eine Antriebswelle und eventuell über eine Kupplung bzw. über ein Getriebe zu der mindestens einen Radantriebswelle. Bei einer Vielzahl von Antriebssträngen ist funktional zwischen dem Getriebe und der Radantriebswelle ein Differential wirksam angeordnet. Hierbei weist das Differential im Allgemeinen ein Achsantriebszahnrad auf. Das Achsantriebszahnrad steht mit mindestens einem Zahnrad des Getriebes in Eingriff. Im Allgemeinen ist im unteren Bereich des das Differential und/oder den Antriebsmotor umschließenden Gehäuses bzw. Gehäuseteils ein Ölsumpfbereich vorgesehen, wobei das Achsantriebszahnrad planschend im Ölsumpfbereich angeordnet ist.

Im Stand der Technik, von dem die Erfindung ausgeht (US 2009/0127954 A1) ist der Antriebsstrang für ein Fahrzeug, insbesondere für ein Kraftfahrzeug im Wesentlichen als ein koaxialer Antriebsstrang ausgebildet. Der Antriebsmotor ist als eine Elektromaschine, insbesondere als Elektromotor ausgeführt, wobei entsprechende Gehäuseteile bzw. Gehäusebereiche vorgesehen sind, die teils den Antriebsmotor, teils das Getriebe und/oder teils das Differential umschließen. Die Zahnräder des Getriebes und/oder das Achsantriebszahnrad bilden mindestens zwei Zahnradstufen aus, wobei zwei Zahnräder des Getriebes auf einer Zwischenwelle angeordnet sind. Es sind zwei Radantriebswellen vorgesehen bzw. vorhanden, wobei mindestens eine Radantriebswelle koaxial zur Antriebswelle angeordnet ist, sich insbesondere durch die als Hohlwelle ausgebildete Antriebswelle hindurch erstreckt. Die Zwischenwelle des Getriebes und die insbesondere auf der Zwischenwelle angeordneten Zahnräder sind im Wesentlichen auf der dem Ölsumpfbereich gegenüberliegenden Seite der Antriebswelle und/oder der Radantriebswelle angeordnet. Anders ausgedrückt, die Zwischenwelle mit den Zahnrädern ist oberhalb der Antriebswelle und oberhalb der Radantriebswellen gelagert und der Ölsumpfbereich im unteren Bereich des Gehäuses bzw. der jeweiligen Gehäuseteile ausgebildet bzw. vorgesehen. Oder nochmals anders ausgedrückt, in Bezug auf die Hochachse des Fahrzeugs betrachtet ist der Ölsumpfbereich unterhalb der Antriebswelle und/oder unterhalb der Radantriebwellen und die Zwischenwelle oberhalb der Antriebswelle bzw. oberhalb der Radantriebswellen gelagert bzw. angeordnet.

Bei dem im Stand der Technik bekannten Antriebsstrang ist zur Ölversorgung der Lager und/oder anderer Komponenten des Antriebsstranges im Bereich des Ölsumpfes eine Ölpumpe vorgesehen. Die Ölpumpe pumpt Öl in entsprechende Strömungskanäle, die dann zu bestimmten Lagern der Antriebswelle, der Radantriebswellen, des Getriebes und/oder zu bestimmten Komponenten des Elektromotors führen, um die jeweiligen Komponenten zu schmieren und/oder zu kühlen. Die Ölpumpe ist insbesondere deswegen notwendig, weil koaxiale Antriebsstränge üblicherweise Lager, Zahnräder und/oder Komponenten aufweisen, die mit Öl geschmiert und/oder gekühlt werden müssen, die aber nicht direkt mit dem relativ breiten Ölsumpfbereich Kontakt haben, wie beispielsweise ein im Ölsumpfbereich planschend angeordnetes Achsantriebszahnrad. Letzteres führt bei einer entsprechenden Anordnung insbesondere aber auch zu erhöhten Planschverlusten und reduziert den Wirkungsgrad des Getriebes bzw. des Antriebsstranges. Auch eine insbesondere elektrisch ausgeführte Ölpumpe muss entsprechend angetrieben werden und erfordert einen damit verbundenen Energiebedarf.

Weiterhin ist aus der EP 1 907 729 A1 ein Antriebsstrang bekannt, der eine Antriebswelle, ein Getriebe, zwei Ölbehälter und zwei Radantriebswellen aufweist. Hierbei ist der Ölsumpfbereich im unteren Bereich des Gehäuses ausgebildet. Die beiden Ölbehälter sind jeweils als Auffangtank ausgebildet und erstrecken sich im Wesentlichen parallel zu den beiden Radantriebswellen.

Schließlich ist in der US 2016/103455 A1 ein Antriebsstrang offenbart, der eine Antriebswelle, ein Getriebe, ein Differential und zwei Ölbehälter aufweist. Auch diese beiden Ölbehälter sind als Auffangbehälter ausgebildet, wobei einer der Auffangbehälter in einem "Totraum" des Getriebes ausgebildet bzw. angeordnet ist.

Die im Stand der Technik bekannten Antriebsstränge und/oder bisherigen Ölbehälter sind daher noch nicht optimal ausgebildet. Einerseits sind separate Ölpumpen zur Förderung des Öls notwendig, die den Wirkungsgrad eines Antriebsstranges verringern, sowie den konstruktiven Aufbau und die damit verbundenen Kosten erhöhen. Des Weiteren wird - im Stand der Technik bisher - versucht, die auf der Zwischenwelle des Getriebes angeordneten Zahnräder durch einen entsprechend konstruktiv gestalteten Gehäuseaufbau, durch den im oberen Gehäusebereich dann ein zweiter weiterer Ölsumpf gebildet ist, entsprechend zu schmieren und/oder zu kühlen. Letzteres ist einerseits konstruktiv aufwändig und kostenintensiv, andererseits erfordert dies einen erhöhten Bauraumbedarf.

Der Erfindung liegt daher die Aufgabe zugrunde, einen Antriebsstrang nun derart auszugestalten und weiterzubilden, dass einerseits der Wirkungsgrad eines Antriebsstranges verbessert ist, andererseits der konstruktive und kostenmäßige Aufwand zur Ausbildung von Ölsumpfbereichen und/oder Strömungskanälen verringert ist.

Die zuvor gezeigt Aufgabe ist nun zunächst durch die Merkmale des Patentanspruches 1 gelöst.

Es ist nun zunächst ein Ölbehälter vorgesehen und/oder vorhanden, der funktional derart ausgebildet und/oder angeordnet ist, so dass der Ölbehälter im Bereich zwischen den beiden Zahnradstufen und im Wesentlichen auf der dem Ölsumpfbereich gegenüberliegenden Seite der Antriebswelle und/oder der Radantriebswelle angeordnet ist. Durch die Ausbildung eines derartigen Ölbehälters und dessen bestimmungsgemäßer bzw. positionsbestimmter Anordnung werden entscheidende Vorteile erzielt, die insbesondere, was im Folgenden noch näher erläutert werden dürfen. Im Wesentlichen ist nun keine separate elektrisch antreibbare Ölpumpe mehr notwendig. Auch der konstruktive Aufwand, der bisher im Stand der Technik notwendig war, um beispielsweise einen zweiten Ölsumpf im oberen Bereich des Gehäuses auszubilden, entfällt. Hierdurch ist der Konstruktionsaufwand und die Kosten reduziert sowie der Wirkungsgrad des Getriebes bzw. des Antriebsstranges erhöht.

Hierbei erstreckt sich die Längsachse des Ölbehälters parallel zu dem durch die jeweiligen Durchmesser der Zahnräder bestimmten jeweiligen Ebenen. Insbesondere erstreckt sich der Ölbehälter bzw. dessen Ausbildung/Dimensionierung im Wesentlichen über die gesamte Breite des Gehäuses. Der Ölbehälter ist im Wesentlichen zwischen den beiden Zahnradstufen ausgebildet und/oder angeordnet ist. Hierdurch wird quasi funktional nicht nur ein "zweiter Ölsumpfbereich" im oberen Bereich des Gehäuses zur Versorgung der auf der Zwischenwelle angeordneten Zahnräder ausgebildet, sondern dies ermöglicht auch den Weitertransport des Öls in andere Bereiche des Gehäuses und zu verschiedenen bestimmten Lagern bzw. zu bestimmten Bereichen des Getriebes was im Folgenden noch erläutert werden darf.

Zunächst weist der Ölbehälter einen mit Öl befüllbaren Innenraum und einen Öl-Eintrittsbereich auf. Der Öl-Eintrittsbereich ist derart positioniert und/oder ausgebildet, so dass durch das rotierende Achsantriebszahnrad Öl aus dem Ölsumpfbereich in den Öl-Eintrittsbereich transportierbar ist. Hierbei weist der Öl-Eintrittsbereich insbesondere eine Öl-Eintrittsfenster und einen gewölbt ausgebildeten Öl-Auffangbereich auf, wobei letztere insbesondere an die Kontur des rotierenden Achsantriebszahnrades zumindest teilweise angepasst ist. Über das Achsantriebszahnrad, das im Antriebsstrang - bei Betrieb - entsprechend rotiert, ist insbesondere bei entsprechender Vorwärtsfahrt des Kraftfahrzeuges dann Öl aus dem Ölsumpfbereich in den Innenraum des Ölbehälters förderbar, insbesondere ohne dass eine separate elektrisch antreibbare Pumpe vorgesehen werden muss.

Der Ölbehälter weist mindestens einen ersten Öl-Austrittsbereich auf, wobei der erste Öl-Austrittsbereich derart positioniert und/oder ausgebildet ist, so dass einerseits Öl aus dem Innenraum des Ölbehälters herausführbar und - für den Weitertransport - einem auf der Zwischenwelle angeordnetem Zahnrad zuführbar ist. Hierzu weist der erste Öl-Austrittsbereich insbesondere ein Öl-Austrittsfenster und einen teilweise gewölbt und/oder rampenförmig ausgebildeten Öl-Führungsbereich auf. Insbesondere wird über den ersten Öl-Austrittsbereich das entsprechende auf der Zwischenwelle angeordnete Zahnrad geschmiert und/oder gekühlt, insbesondere kann aber auch zusätzlich das Öl zu anderen Stellen des Antriebsstranges, insbesondere zu verschiedenen Lagern und/oder weiteren Strömungskanälen weitertransportiert werden, was im Folgenden ebenfalls noch erläutert werden darf.

Der Ölbehälter weist insbesondere mehrere Öl-Austrittsbereiche auf, mit deren Hilfe verschiedene Lager des Antriebsstranges und/oder mehrere zu verschiedenen Lagern führende Strömungskanäle mit Öl versorgbar sind. Durch den entsprechend ausgebildeten Ölbehälter wird daher die Flexibilität der Ölschmierung / Ölversorgung des Antriebsstranges auf konstruktive einfache Art und Weise erhöht.

So ist die Antriebswelle des Antriebsstranges mit Hilfe von einem ersten und einem zweiten axial zueinander beabstandetem Lager gelagert, wobei der Ölbehälter zur Versorgung dieser Lager einen zweiten und einen dritten Öl-Austrittsbereich aufweist. Der zweite und der dritte Öl-Austrittsbereich sind insbesondere auf ein und dergleichen Seite des Ölbehälters vorgesehen bzw. ausgebildet, insbesondere auf der "Motorseite" des Ölbehälters ausgebildet.

Zwischen dem Differential bzw. des Achsantriebszahnrads des Differentials und einem einen Antriebsmotor aufweisendem Gehäuseteil ist zur Lagerung des Differentials ein Lagerschild angeordnet. Insbesondere weist der Lagerschild in seinem oberen Bereich, also auf der dem Ölsumpfbereich abgewandten Seite, einen abgeflachten Bereich auf, auf dem der Ölbehälter auf einfache konstruktive Art und Weise, insbesondere über Steckverbindungen anordenbar ist. Hierdurch ist eine einfache und kostengünstige Montage gewährleistet.

Der Ölbehälter weist weiterhin schließlich einen vierten Öl-Austrittsbereich auf, mit dessen Hilfe ein in einer Lageraufnahme des Lagerschildes angeordnetes drittes Lager mit Öl versorgbar ist. Insbesondere der vierte Öl-Austrittsbereich weist eine Öl-Austrittsöffnung auf, die mit einem insbesondere teilweise rampenförmig ausgebildeten Zuführbereich des Lagerschildes strömungsverbunden ist. Der Zuführbereich des Lagerschildes ist insbesondere als ein integraler Bestandteil des Lagerschildes ausgeführt und führt bzw. leitet das Öl zu dem in der Lageraufnahme des Lagerschildes angeordneten dritten Lager. Aufgrund der Anordnung des Ölbehälters auf dem Lagerschild und der zuvor geschilderten Ausführung ist hierzu ebenfalls keine weitere separat antreibbare Ölpumpe erforderlich.

Gehäuseteile bzw. entsprechende Gehäusebereiche des Antriebsstranges weisen zur Versorgung des ersten und zweiten Lagers Strömungskanäle auf, die insbesondere über den zweiten und dritten Öl-Austrittsbereich des Ölbehälters mit Öl versorgbar sind.

Der erste, der zweite und der dritte Öl-Austrittsbereich sind auf der gleichen Seite des Ölbehälters, insbesondere auf der motorseitigen Seite des Ölbehälters angeordnet und/oder ausgebildet. Der Öl-Eintrittsbereich ist insbesondere auf der hierzu gegenüberliegenden Seite des Ölbehälters, insbesondere auf der motorseitig abgewandten Seite des Ölbehälters angeordnet und/oder ausgebildet. Hingegen ist der vierte Öl-Austrittsbereich auf der Unterseite des Ölbehälters ausgebildet. Im Wesentlichen sind alle Öl-Ein- und/oder Austrittsbereiche untereinander strömungsverbunden bzw. mit dem Innenraum des Ölbehälters, der mit Öl befüllbar ist, entsprechend strömungstechnisch verbunden.

Im Ergebnis sind die eingangs genannten Nachteile auf konstruktive einfache Art und Weise verbessert und der Wirkungsgrad des Antriebsstranges ist erhöht.

Es gibt nun eine Vielzahl von Möglichkeiten den erfindungsgemäßen Ölbehälter und/oder den erfindungsgemäßen Antriebsstrang in vorteilhafter Art und Weise auszugestalten und weiterzubilden. Hierfür darf zunächst auf die dem Patentanspruch 1 nachgeordneten Patenansprüche verwiesen werden. Im Folgenden darf eine bevorzugte Ausführungsform der Erfindung anhand der nachfolgenden Zeichnung und der dazugehörigen Beschreibung näher erläutert werden. In der Zeichnung zeigt:
Fig. 1 in schematischer Darstellung, teilweise im Schnitt einen Antriebsstrang mit den entsprechenden Komponenten,
Fig. 2 in schematischer Darstellung die wesentlichen Komponenten des Antriebsstranges, dargestellt insbesondere ohne Gehäuseteile, ohne Ölbehälter und ohne Lagerschild, aber dargestellt mit Antriebsmotor, Antriebswelle, Zahnradstufen des Getriebes, Differential und Radantriebswellen sowie teilweise mit den mit Öl zu versorgenden entsprechenden Lagern,
Fig. 3 in schematischer Darstellung, teilweise im Schnitt die Anordnung eines Ölbehälters zwischen den Zahnradstufen des Getriebes,
Fig. 4 bis 7 den Ölbehälter in schematischer Darstellung von unterschiedlichen Seiten/Ansichten betrachtet, teils auch perspektivisch dargestellt,
Fig. 8 bis 11 in schematischer Darstellung das den Antriebsmotor und das Differential umschließende Gehäuse bzw. die entsprechenden Gehäuseteile teils von der Seite, teils in der Perspektive, sowie
Fig. 12a, 12b Teilausschnitte mit dem in dem Gehäuse angeordneten Ölbehälter bzw. mit den Strömungskanälen zur Versorgung von bestimmten Lagern mit Öl.

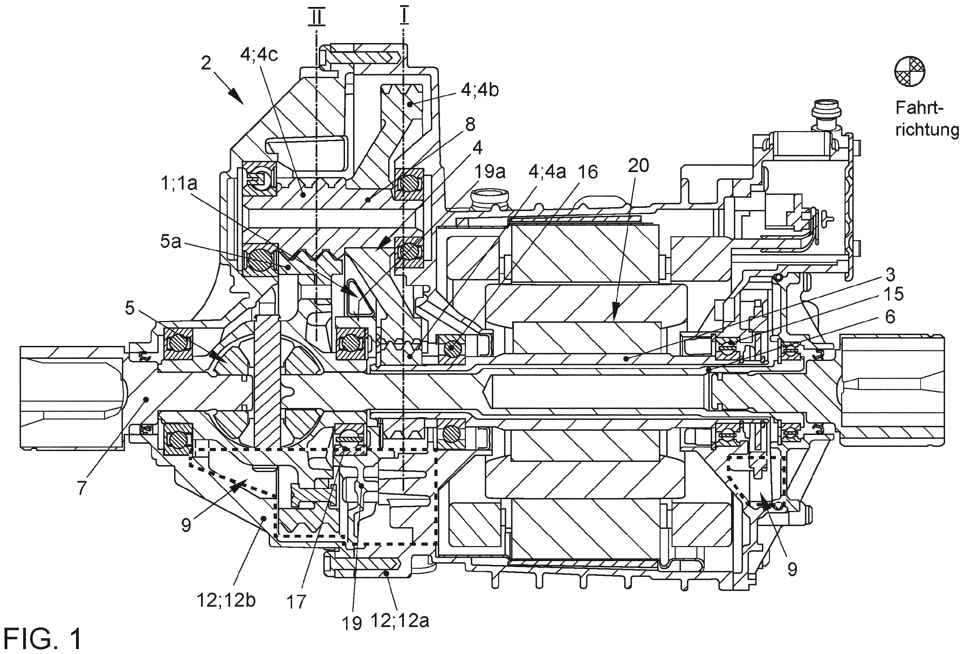

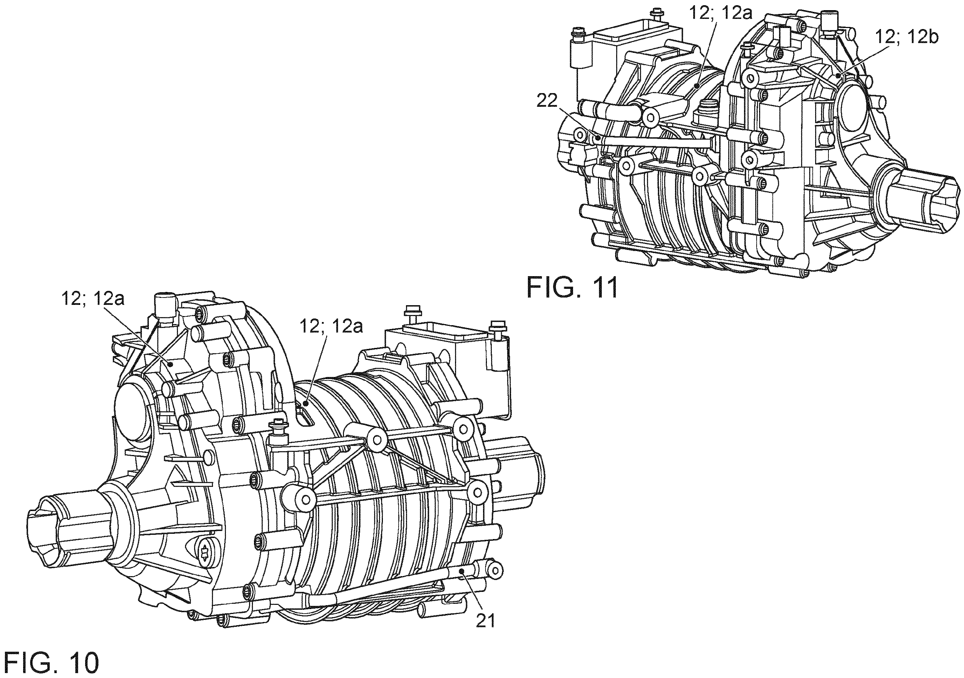

Die Fig. 1 bis 12 zeigen zumindest teilweise einen Ölbehälter 1 zur Kühlung und/oder Schmierung von Lagern bzw. zur Versorgung der Lager eines Antriebsstranges 2 mit Öl, insbesondere eines Antriebsstranges 2 eines nicht vollständig dargestellten Fahrzeuges, insbesondere eines nicht vollständig dargestellten Kraftfahrzeuges.

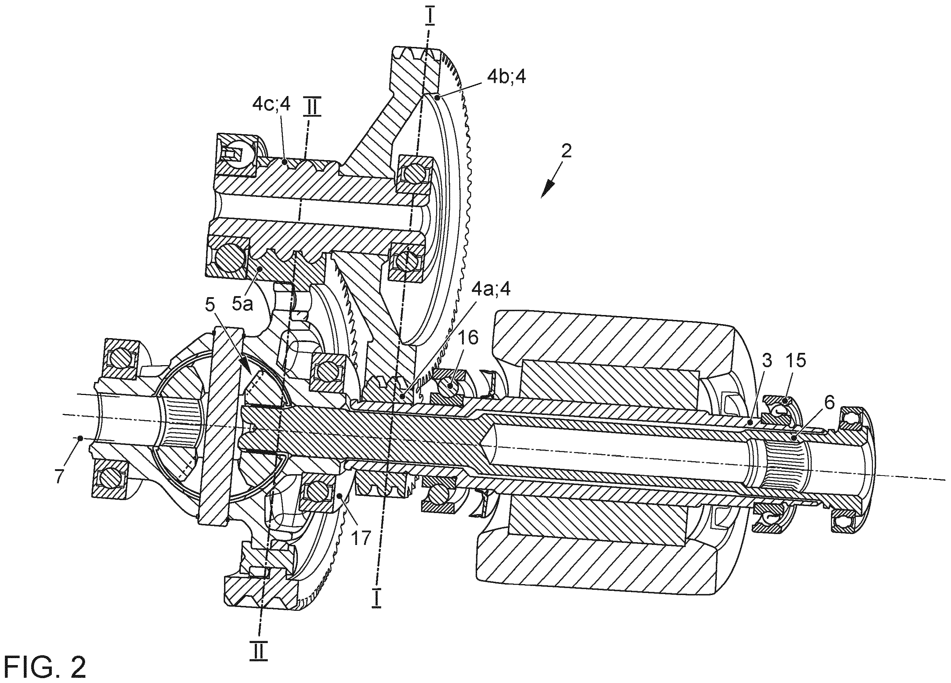

Der Antriebsstrang 2 ist insbesondere in Fig. 1 mit den wesentlichen Komponenten schematisch dargestellt, wobei in Fig. 2 der in Fig. 1 dargestellte Antriebsstrang 2 mit den wesentlichen Komponenten, aber insbesondere ohne Gehäuseteile (12, 12a, 12b) und/oder ohne Gehäusewandungen bzw. ohne Gehäusebereiche dargestellt ist.

Der Antriebsstrang 2 weist eine Antriebswelle 3, ein Getriebe 4, mindestens ein Differential 5 und mindestens eine Radantriebswelle 6, hier insbesondere zwei Radantriebswellen 6 und 7 auf.

Wie insbesondere aus den Fig. 1 und 2 hervorgeht bzw. hier schematisch dargestellt ist, weist das Differential 5 ein Achsantriebszahnrad 5a auf. Das Getriebe 4 wird hier insbesondere zunächst durch ein auf der Antriebswelle 3 angeordnetes Zahnrad, insbesondere erstes Ritzel 4a, ein auf einer Zwischenwelle 8 angeordnetes Zahnrad 4b, ein auf der Zwischenwelle 8 ausgebildetes - zweites - Ritzel 4c gebildet. Das Getriebe 4 weist zwei Zahnradstufen auf, wobei die erste Zahnradstufe I durch das erste Ritzel 4a und das Zahnrad 4b, die miteinander in Eingriff stehen, gebildet wird und die zweite Zahnradstufe II durch das zweite Ritzel 4c und das Achsantriebszahnrad 5a gebildet wird, die miteinander entsprechend in Eingriff stehen. Je nach Betrachtungsweise kann daher das Achsantriebszahnrad 5a auch funktional zum Getriebe 4 mit "hinzugezählt" werden, insbesondere um ein funktionelles Getriebe 4 mit auszubilden.

Wie die Fig. 1 zeigt ist im unteren Bereich des Antriebsstranges, insbesondere im unteren Bereich eines Gehäuses 12 ein Ölsumpfbereich 9 ausgebildet bzw. vorgesehen. Das Achsantriebszahnrad 5a ist zumindest teilweise im Ölsumpfbereich 9 planschend angeordnet, was ebenfalls aus der Fig. 1 gut zu erkennen ist.

Mindestens eine Radantriebswelle, hier zwei Radantriebswellen 6 und 7 sind koaxial zur Antriebswelle 3 angeordnet. Der Antriebsstrang 2 ist hier als koaxialer Antriebsstrang 2 ausgebildet, insbesondere verläuft die Radantriebswelle 6 zumindest teilweise innerhalb der als Hohlwelle ausgebildeten Antriebswelle 3, was aus den Fig. 1 und 2 gut ersichtlich ist.

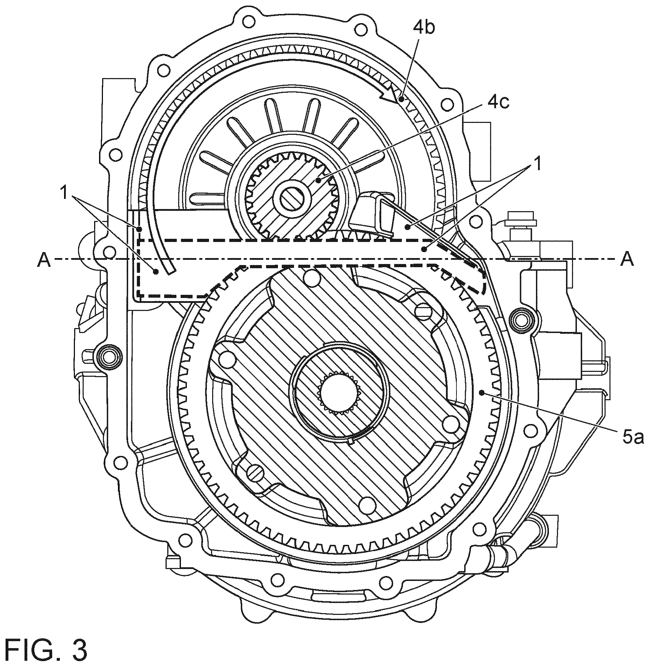

Die Zwischenwelle 8 des Getriebes 4 ist nun im Wesentlichen auf der dem Ölsumpfbereich 9 gegenüberliegenden Seite der Antriebswelle 3 und/oder auf der dem Ölsumpfbereich 9 gegenüberliegenden Seite der Radantriebswelle 6 angeordnet. Auch dies ist in Fig. 1 gut erkennbar. Anders ausgedrückt, was auch im Zusammenhang der Fig. 1 in Zusammenschau mit der Fig. 3 und den Fig. 8 und 9 deutlich wird, ist, dass der Ölsumpfbereich 9 im unteren Bereich des Gehäuses 12 ausgebildet und/oder vorhanden ist, wobei im oberen Bereich des Gehäuses 12 die Zwischenwelle 8 gelagert ist. Mit dem Ausdruck "im Wesentlichen auf der gegenüberliegenden Seite angeordnet" ist daher grundsätzlich gemeint, dass die Zwischenwelle 8 des Getriebes 4 insbesondere auf einer höheren Ebene angeordnet ist, als das Niveau des Ölsumpfes 9, insbesondere also über dem Ölsumpf 9 gelagert ist, nämlich insbesondere daher "auf der dem Ölsumpf 9 gegenüberliegenden Seite der Antriebswelle 3". Die Zwischenwelle 8 kann daher - zur Hochachse des Kraftfahrzeuges betrachtet - direkt vertikal über der Antriebswelle 3 angeordnet sein, aber auch teils schräg nach oben versetzt und parallel verlaufend zur Antriebswelle 3 im oberen Bereich des Gehäuses 12 angeordnet sein. Das Gehäuse 12 wird hier insbesondere aus den beiden Gehäuseteilen 12a und 12b gebildet.

Der Ölbehälter 1 ist funktional derart angeordnet ist, so dass der Ölbehälter 1 im Bereich zwischen den beiden Zahnradstufen I und II und auf der dem Ölsumpfbereich 9 gegenüberliegenden Seite der Antriebswelle 3 und/oder der Radantriebswelle 6 angeordnet ist. Hierdurch bedingt können eine Vielzahl von Vorteilen realisiert werden, die eingangs bereits näher erläutert worden sind.

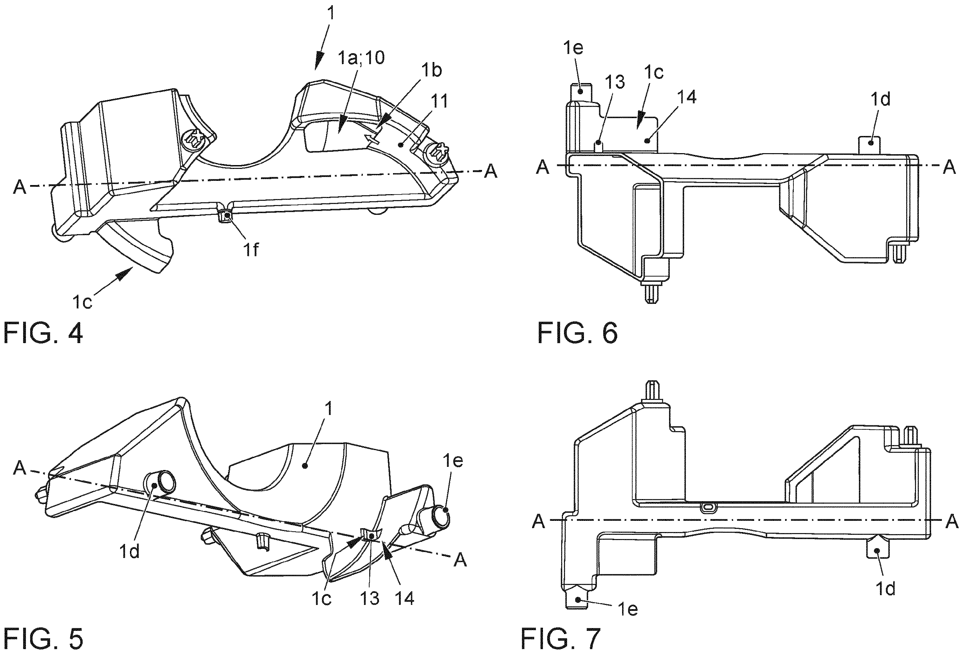

Wie insbesondere die Fig. 3 veranschaulicht, erstreckt sich die Längsachse A des Ölbehälters 1 parallel zu den durch die jeweiligen Durchmesser, insbesondere durch die Kreisdurchmesser der Zahnräder 4a, 4b, 4c bzw. 5a bestimmten jeweiligen Ebene. Anders ausgedrückt, die erste Zahnradstufe I bzw. durch die Durchmesser der Zahnräder des ersten Ritzels 4a und des Zahnrades 4b wird im Wesentlichen schematisch eine erste Ebene der ersten Zahnradstufe I gebildet, wobei durch die Durchmesser der Zahnräder 4c, also des zweiten Ritzels 4c und des Achsantriebsrads 5a, also durch die jeweiligen Durchmesser eine weitere Ebene, nämlich die Ebene der zweiten Zahnradstufe II gebildet wird. Hierzwischen erstreckt sich im Wesentlichen die Längsachse A des Ölbehälters 1, so wie in Fig. 3 dargestellt bzw. teilweise in den Fig. 4 bis 7 eingezeichnet, wobei die Längsachse A dann parallel zu den zuvor genannten Ebenen verläuft.

Insbesondere, so wie dies aus der Fig. 3 ersichtlich ist, erstreckt sich der Ölbehälter 1 im Wesentlichen dann von einer ersten Gehäusewandung des Gehäuses 12 quer, insbesondere im Wesentlichen vollständig über die Breite bzw. den Querschnitt des Gehäuses 12 bis zur gegenüberliegenden anderen, nicht näher bezeichneten Gehäusewandung des Gehäuses 12. Der Ölbehälter 1 ist also insbesondere entsprechend auch in Abhängigkeit des zur Verfügung stehenden Freiraumes bzw. des freien Querschnittes des Gehäuses 12 entsprechend angepasst und/oder dimensioniert.

Der Ölbehälter 1 weist einen Öl-Eintrittsbereich 1b auf, wobei der Öl-Eintrittsbereich 1b derart positioniert und/oder ausgebildet ist, so dass durch das rotierende Achsantriebszahnrad 5a Öl aus dem Ölsumpfbereich 9 in den Öl-Eintrittsbereich 1b transportierbar ist. Insbesondere weist der Öl-Eintrittsbereich 1b ein Öl-Eintrittsfenster 10 und einen gewölbt ausgebildeten Öl-Auffangbereich 11 auf. Letzteres ist insbesondere aus der Fig. 4 hier gut ersichtlich.

Der Ölbehälter 1 weist weiterhin mindestens einen ersten Öl-Austrittsbereich 1c auf, wobei der erste Öl-Austrittsbereich 1c derart positioniert und/oder ausgebildet ist, so dass einerseits Öl aus dem Innenraum 1a des Ölbehälters 1 herausführbar und - für den Weitertransport - einem auf der Zwischenwelle 8 angeordneten Zahnrad 4b zuführbar ist. So zeigt Fig. 5, dass der erste Öl-Austrittsbereich 1c ein Öl-Austrittsfenster 13 und einen teilweise gewölbt und/oder rampenförmig ausgebildeten Öl-Führungsbereich 14 aufweist. Insbesondere ist der Öl-Führungsbereich 14 bzw. dessen Wölbung an die äußere Dimensionierung des Zahnrades 4b entsprechend angepasst.

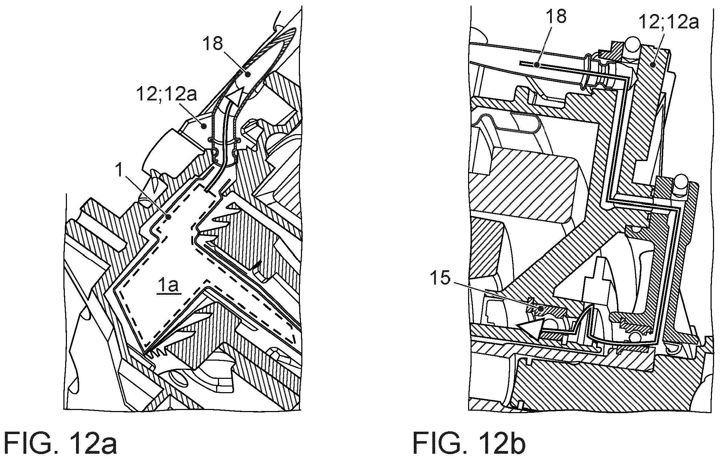

Insbesondere weist der Ölbehälter 1 mehrere Öl-Austrittsbereiche 1c, 1d, 1e und 1f auf, mit deren Hilfe verschiedene Lager 15, 16, 17 des Antriebsstranges 2 und/oder insbesondere mehrere zu verschiedenen Lagern 15, 16 führende Strömungskanäle 18 mit Öl versorgbar sind (vergleiche hierzu auch die Fig. 12a und 12b).

Die Antriebswelle 3 des Antriebsstranges 2 ist mit Hilfe von einem ersten und einem zweiten axial zueinander beabstandetem Lager 15 und 16 gelagert, dies ist aus den Fig. 1, insbesondere aber auch aus Fig. 2 gut ersichtlich.

Der Ölbehälter 1 weist zur Versorgung dieser Lager 15 und 16 einen zweiten Öl-Austrittsbereich 1d und einen dritten Öl-Austrittsbereich 1e auf. Diese beiden Öl-Austrittsbereiche 1d und 1e sind insbesondere in Fig. 5 gut ersichtlich dargestellt, insbesondere sind diese "auf der motorseitigen Seite des Ölbehälters 1" ausgebildet.

Zwischen dem Differential 5 bzw. dem Achsantriebszahnrad 5a des Differentials 5 und einem einen Antriebsmotor 20 aufnehmendem Gehäuse 12 bzw. Gehäuseteil 12a ist zur Lagerung des Differentials 5 ein Lagerschild 19 angeordnet, wobei der Lagerschild 19 einen abgeflachten Bereich 19a aufweist, auf dem der Ölbehälter 1 angeordnet ist.

Schließlich weist der Ölbehälter 1 einen vierten Öl-Austrittsbereich 1f auf, mit dessen Hilfe ein in einer Lageraufnahme des Lagerschildes 19 angeordnetes drittes Lager 17 mit Öl versorgbar ist, insbesondere der vierte Öl-Austrittsbereich 1f eine hier nicht näher bezeichnete Öl-Austrittsöffnung aufweist, die mit einem insbesondere teilweise rampenförmig ausgebildeten Zuführbereich des Lagerschildes 19 strömungsverbunden ist bzw. der rampenförmige Zuführbereich mit Öl über den vierten Öl-Austrittbereich 1f versorgbar ist. Hierbei ist der rampenförmig ausgebildete Zuführbereich des Lagerschildes 19 insbesondere als integraler Bestandteil des Lagerschildes 19 ausgebildet.

Wie die Fig. 12a und 12b zeigen, weist das Gehäuse 12 bzw. insbesondere der entsprechende Gehäuseteil 12a Strömungskanäle 18 zur Versorgung des Lagers 15 auf. Wie insbesondere die Fig. 4 bis 7 deutlich machen, ist der erste, der zweite und der dritte Öl-Austrittsbereich 1c, 1d und 1e auf der gleichen Seite des Ölbehälters 1 angeordnet und/oder ausgebildet, insbesondere auf der motorseitigen Seite des Ölbehälters 1 ausgebildet, wobei der Öl-Eintrittsbereich 1b auf der hierzu gegenüberliegenden Seite des Ölbehälters 1 angeordnet und/oder ausgebildet ist. Schließlich ist der vierte Öl-Austrittsbereich 1f auf der Unterseite des Ölbehälters 1 ausgebildet.

Mit der Anordnung und/oder Ausbildung des hier dargestellten Ölbehälters 1 in dem hier dargestellten und erläuterten Antriebsstrang 2 können die eingangs genannten Vorteile realisiert werden. Insbesondere kann nun Öl aus dem Ölsumpf 9 über das Achsantriebszahnrad 5a in den Öl-Eintrittsbereich 1b des Ölbehälters 1 bzw. in den Innenraum 1a des Ölbehälters 1 befördert werden. Insbesondere die Ausbildung des Lagerschildes 9 und dessen auch teilweise dimensionsartige Anpassung an die Dimensionen des Achsantriebszahnrades 5a begünstigen den Eintritt des Öls in den Öl-Eintrittsbereich 1b, insbesondere in das Öl-Eintrittsfenster 10 des Ölbehälters 1. Das Öl sammelt sich dann im Innenraum des Ölbehälters 1 entsprechend an. Über die Öl-Austrittsbereiche, insbesondere über den ersten Öl-Austrittsbereich 1c und hier über das Öl-Austrittsfenster 13 und den Öl-Führungsbereich 14 wird dann das Öl zum Weitertransport dem auf der Zwischenwelle 8 zugeordneten Zahnrad 4b zugeführt, wo es das Zahnrad 4b und entsprechende weitere Komponenten schmiert und ölt.

Über weitere Öl-Austrittsöffnungen, insbesondere über eine zweite und dritte Öl-Austrittsöffnung 1d und 1e, wobei diese Öl-Austrittsöffnungen steckverbindungsähnlich ausgebildet sind, gelangt das entsprechende Öl über nur teilweise hier insbesondere in den Fig. 12a und 12b dargestellte Strömungskanäle 18 zu den die Antriebswelle 3 lagernden Lager 15 bzw. 16. Schließlich ist der Ölbehälter 1 so ausgebildet, dass über eine vierte Öl-Austrittsöffnung 1f auch ein in der Lageraufnahme des Lagerschildes 19 angeordnetes Lager 17 dieses dann entsprechend schmierbar und/oder kühlbar ist.

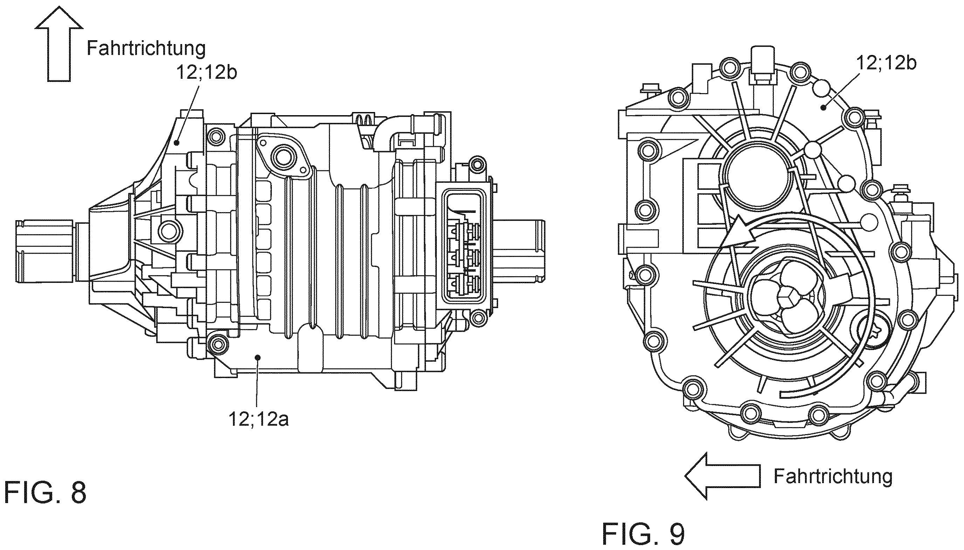

Schließlich zeigen die Fig. 8 bis 11 das Gehäuse 12 mit dem Gehäuseteil 12a der im Wesentlichen den Antriebsmotor 20 umfasst bzw. umschließt und den Gehäuseteil 12b, der im Wesentlichen das Differential 5, das Achsantriebszahnrad 5a bzw. Teile des Getriebes 4 umschließt. Weiterhin ist gut ersichtlich die Anordnung und/oder auch höhenmäßige Ausrichtung/Positionierung einiger Komponenten im Vergleich zur Fahrtrichtung des Kraftfahrzeuges. Weiterhin dargestellt sind entsprechende Rohrleitungen bzw. Kanäle 21, 22 zur zumindest teilweisen Rückführung des Öls in den Ölsumpfbereich 9 bzw. zur Leitung des Öls außerhalb des Gehäuses 12, insbesondere zwischen zwei Strömungskanälen.

An dieser Stelle darf zusätzlich darauf hingewiesen werden, dass der Ölsumpfbereich 9 insbesondere mit Hilfe des Lagerschildes 19 in zwei Bereiche geteilt ist, der Lagerschild 19 nämlich einen hier nicht näher bezeichneten flanschartigen Umfangsbereich aufweist, der sich in Richtung nach unten auf den Ölsumpfbereich 9 erstreckt. Diese Ausbildung verhindert insbesondere unnötige Planschverluste, wenn das Achsantriebszahnrad 5a planschend im Ölsumpfbereich 9, so wie hier dargestellt, angeordnet ist.

Insbesondere darf hier darauf hingewiesen werden, was ebenfalls aus der Fig. 1 und 3 hervorgeht, dass der Lagerschild 19 so ausgebildet ist, dass dieser räumlich nah benachbart am Achsantriebszahnrad 5a angeordnet und/oder so ausgebildet ist, das der Ölstrom über das Achsantriebszahnrad auch mit Hilfe des Lagerschildes 19 dem Ölbehälter 1 bzw. dem Öl-Eintrittsbereich 1b zuführbar ist.

Im Ergebnis sind die eingangs genannten Nachteile vermieden und entsprechende Vorteile erzielt.

### Bezugszeichenliste

- 1: Ölbehälter
- 1a: Innenraum
- 1b: Öl-Eintrittsbereich
- 1c: erster Öl-Austrittsbereich
- 1d: zweiter Öl-Austrittsbereich
- 1e: dritter Öl-Austrittsbereich
- 1f: vierter Öl-Austrittsbereich
- 2: Antriebsstrang
- 3: Antriebswelle
- 4: Getriebe
- 4a: erstes Ritzel
- 4b: Zahnrad
- 4c: zweites Ritzel
- 5: Differential
- 5a: Achsantriebszahnrad
- 6: Radantriebswelle
- 7: Radantriebswelle
- 8: Zwischenwelle
- 9: Ölsumpfbereich
- 10: Öl-Eintrittsfenster
- 11: Öl-Auffangbereich
- 12: Gehäuse (12a/12b Gehäuseteil)
- 13: Öl-Austrittsfenster
- 14: Öl-Führungsbereich
- 15: Lager
- 16: Lager
- 17: Lager
- 18: Strömungskanal
- 19: Lagerschild
- 19a: abgeflachter Bereich
- 20: Antriebsmotor
- 21: Rohrleitung / Kanal
- 22: Rohrleitung / Kanal
- A: Längsachse des Ölbehälters
- I: erste Zahnradstufe
- II: zweite Zahnradstufe

## Patentansprüche

1. Antriebsstrang (2) eines Fahrzeuges, insbesondere eines Kraftfahrzeuges, wobei der Antriebsstrang (2) einen Ölbehälter (1) zur Kühlung und/oder Schmierung von Lagern (15, 16, 17), eine Antriebswelle (3), ein Getriebe (4) mit einem ersten Zahnrad (4c), einem zweiten Zahnrad (4a) und einem dritten Zahnrad (4b), ein Differential (5), mindestens eine Radantriebswelle (6, 7) und ein Gehäuse (12) aufweist, wobei das Differential (5) ein Achsantriebszahnrad (5a) aufweist und das Achsantriebszahnrad (5a) mit einem ersten Zahnrad (4c) des Getriebes (4) in Eingriff steht, wobei mindestens ein Ölsumpfbereich (9) im unteren Bereich des Gehäuses (12) ausgebildet ist, wobei das Achsantriebszahnrad (5a) und/oder das zweite Zahnrad (4a) des Getriebes (4) zumindest teilweise im Ölsumpfbereich (9) planschend angeordnet ist, wobei die Zahnräder (4a,4b, 4c) des Getriebes (4) und das Achsantriebszahnrad (5a) mindestens zwei Zahnradstufen (I, II) ausbilden und zwei Zahnräder (4b, 4c) des Getriebes (4) auf einer Zwischenwelle (8) angeordnet sind, und wobei die mindestens eine Radantriebswelle (6, 7) koaxial zur Antriebswelle (3) angeordnet ist und die Zwischenwelle (8) des Getriebes (4) auf der dem Ölsumpfbereich (9) gegenüberliegenden Seite der Antriebswelle (3) und/oder der mindestens einen Radantriebswelle (6,7) angeordnet ist, **dadurch gekennzeichnet, dass** der Ölbehälter (1) funktional derart angeordnet ist, so dass der Ölbehälter (1) im Bereich zwischen den beiden Zahnradstufen (I, II) und auf der dem Ölsumpfbereich (9) gegenüberliegenden Seite der Antriebswelle (3) und/oder der mindestens einen Radantriebswelle (6, 7) angeordnet ist, und wobei sich die Längsachse (A) des Ölbehälters (1) parallel zu den durch die jeweiligen Durchmesser des ersten Zahnrades (4c) des Getriebes (4) und des Achsantriebszahnrades (5a) einerseits, und des zweiten und dritten Zahnrades (4a, 4b) andererseits bestimmten jeweiligen Ebenen erstreckt.

2. Antriebsstrang (2) nach Anspruch 1, **dadurch gekennzeichnet, dass** der Ölbehälter (1) einen mit Öl befüllbaren Innenraum (1a) und einen Öl-Eintrittsbereich (1b) aufweist, wobei der Öl-Eintrittsbereich (1b) derart positioniert und/oder ausgebildet ist, so dass durch das rotierende Achsantriebszahnrad (5a) Öl aus dem Ölsumpfbereich (9) in den Öl-Eintrittsbereich (1b) transportierbar ist, insbesondere der Öl-Eintrittsbereich (1b) ein Öl-Eintrittsfenster (10) und einen gewölbt ausgebildeten Öl-Auffangbereich (11) aufweist.

3. Antriebsstrang (2) nach einem der Ansprüche 1 bis 2, **dadurch gekennzeichnet, dass** der Ölbehälter (1) mindestens einen ersten Öl-Austrittsbereich (1c) aufweist, wobei der erste Öl-Austrittsbereich (1c) derart positioniert und/oder ausgebildet ist, so dass einerseits Öl aus dem Innenraum (1a) des Ölbehälters (1) herausführbar und - für den Weitertransport - einem auf der Zwischenwelle (8) angeordneten Zahnrad (4b, 4c) zuführbar ist, insbesondere der erste Öl-Austrittsbereich (1c) ein Öl-Austrittsfenster (13) und einen teilweise gewölbt und/oder rampenförmig ausgebildeten Öl-Führungsbereich (14) aufweist.

4. Antriebsstrang (2) nach einem der Ansprüche 1 bis 3, **dadurch gekennzeichnet, dass** der Ölbehälter (1) mehrere Öl-Austrittsbereiche (1d, 1e, 1f) aufweist, mit deren Hilfe Lager (15, 16, 17) des Antriebsstranges (2) und/oder mehrere zu den Lagern (15, 16, 17) führende Strömungskanäle (18) mit Öl versorgbar sind.

5. Antriebsstrang (2) nach einem der Ansprüche 1 bis 4, **dadurch gekennzeichnet, dass** die Antriebswelle (3) des Antriebsstranges (2) mit Hilfe von einem ersten und einem zweiten axial zueinander beabstandeten Lager (15, 16) gelagert ist, wobei der Ölbehälter (1) zur Versorgung dieser Lager (15, 16) einen zweiten und dritten Öl-Austrittsbereich (1d und 1e) aufweist.

6. Antriebsstrang (2) nach einem der Ansprüche 1 bis 5, **dadurch gekennzeichnet, dass** zwischen dem Differential (5) bzw. dem Achsantriebszahnrad (5a) des Differentials (5) und einem einen Antriebsmotor (20) aufnehmenden Gehäuseteil (12a) zur Lagerung des Differentials (5) ein Lagerschild (19) angeordnet ist, wobei der Lagerschild (19) einen abgeflachten Bereich (19a) aufweist, auf dem der Ölbehälter (1) angeordnet ist.

7. Antriebsstrang (2) nach Anspruch 6, **dadurch gekennzeichnet, dass** der Ölbehälter (1) einen vierten Öl-Austrittsbereich (1f) aufweist, mit dessen Hilfe ein in einer Lageraufnahme des Lagerschildes (19) angeordnetes drittes Lager (17) mit Öl versorgbar ist, insbesondere der vierte Öl-Austrittsbereich (1f) eine Ölaustrittsöffnung aufweist, die mit einem insbesondere teilweise rampenförmig ausgebildeten Zuführbereich des Lagerschildes (19) strömungsverbunden ist.

8. Antriebsstrang (2) nach Anspruch 5, **dadurch gekennzeichnet,**
**dass** das Gehäuse (12) Strömungskanäle (18) zur Versorgung des ersten und zweiten Lagers (15, 16) aufweist, die mit Hilfe des zweiten und dritten Öl-Austrittsbereiches (1d und 1e) mit Öl versorgbar sind.

9. Antriebsstrang (2) nach den Ansprüchen 3, 4 mit 7, **dadurch gekennzeichnet,**
**dass** der erste, der zweite und der dritte Öl-Austrittsbereich (1c, 1d, 1e) auf der gleichen Seite des Ölbehälters (1) angeordnet und/oder ausgebildet sind, wobei der Öl-Eintrittsbereich (1b) auf der hierzu gegenüberliegenden Seite des Ölbehälters (1) angeordnet und/oder ausgebildet ist, und wobei der vierte Öl-Austrittsbereich (1f) auf der Unterseite des Ölbehälters (1) ausgebildet ist.

## Claims

1. Drive train (2) of a vehicle, in particular of a motor vehicle, the drive train (2) comprising an oil container (1) for cooling and/or lubricating bearings (15, 16, 17), a drive shaft (3), a transmission (4) having a first gear (4c), a second gear (4a) and a third gear (4b), a differential (5), at least one wheel drive shaft (6, 7) and a housing (12), the differential (5) comprising an axle drive gear (5a) and the axle drive gear (5a) being in engagement with a first gear (4c) of the transmission (4), at least one oil sump region (9) being arranged in the lower region of the housing (12), the axle drive gear (5a) and/or the second gear (4a) of the transmission (4) being arranged so as to splash at least partially in the oil sump region (9), the gears (4a, 4b, 4c) of the transmission (4) and the axle drive gear (5a) forming at least two gear stages (I, II), and two gears (4b, 4c) of the transmission (4) being arranged on an intermediate shaft (8), and the at least one wheel drive shaft (6, 7) being arranged coaxially to the drive shaft (3), and the intermediate shaft (8) of the transmission (4) being arranged on the side of the drive shaft (3) opposite the oil sump region (9) and/or on the at least one wheel drive shaft (6, 7), **characterized in that** the oil container (1) is functionally arranged such that the oil container (1) is arranged in the region between the two gear stages (I, II) and on the side of the drive shaft (3) opposite the oil sump region (9) and/or on the at least one wheel drive shaft (6, 7), and the longitudinal axis (A) of the oil container (1) extending in parallel with the respective planes determined by the respective diameters of the first gear (4c) of the transmission (4) and the axle drive gear (5a) on the one hand, and the second and third gear (4a, 4b) on the other hand.

2. Drive train (2) according to claim 1, **characterized in that** the oil container (1) comprises an interior (1a) which can be filled with oil and an oil inlet region (1b), the oil inlet region (1b) being positioned and/or formed such that oil can be transported from the oil sump region (9) into the oil inlet region (1b) by the rotating axle drive gear (5a), the oil inlet region (1b) in particular comprising an oil inlet window (10) and a curved oil collection region (11).

3. Drive train (2) according to either claim 1 or claim 2, **characterized in that** the oil container (1) comprises at least one first oil outlet region (1c), the first oil outlet region (1c) being positioned and/or formed such that oil can be discharged from the interior (1a) of the oil container (1) and, for further transport, can be supplied to a gear (4b, 4c) arranged on the intermediate shaft (8), the first oil outlet region (1c) in particular comprising an oil outlet window (13) and a partially curved and/or ramp-shaped oil guide region (14).

4. Drive train (2) according to any of claims 1 to 3, **characterized in that** the oil container (1) comprises a plurality of oil outlet regions (1d, 1e, 1f), by means of which bearings (15, 16, 17) of the drive train (2) and/or a plurality of flow channels (18) leading to the bearings (15, 16, 17) can be supplied with oil.

5. Drive train (2) according to any of claims 1 to 4, **characterized in that** the drive shaft (3) of the drive train (2) is mounted by means of a first and a second bearing (15, 16) which are axially spaced apart from one another, the oil container (1) comprising a second and third oil outlet region (1d and 1e) for supplying said bearings (15, 16).

6. Drive train (2) according to any of claims 1 to 5, **characterized in that** an end shield (19) for mounting the differential (5) is arranged between the differential (5) or the axle drive gear (5a) of the differential (5) and a housing part (12a) accommodating a drive motor (20), the end shield (19) comprising a flattened region (19a) on which the oil container (1) is arranged.

7. Drive train (2) according to claim 6, **characterized in that** the oil container (1) comprises a fourth oil outlet region (1f), by means of which a third bearing (17) arranged in a bearing receptacle of the end shield (19) can be supplied with oil, the fourth oil outlet region (1f) in particular comprising an oil outlet opening which is fluidically connected to a feed region of the end shield (19), which feed region is in particular partially formed in a ramp shape.

8. Drive train (2) according to claim 5, **characterized in that** the housing (12) comprises flow channels (18) for supplying the first and second bearings (15, 16), which flow channels can be supplied with oil by means of the second and third oil outlet regions (1d and 1e).

9. Drive train (2) according to claims 3, 4 and 7, **characterized in that** the first, second and third oil outlet regions (1c, 1d, 1e) are arranged and/or formed on the same side of the oil container (1), the oil inlet region (1b) being arranged and/or formed on the side of the oil container (1) opposite thereto, and the fourth oil outlet region (1f) being formed on the underside of the oil container (1).

## Revendications

1. Chaîne cinématique (2) d'un véhicule, en particulier d'un véhicule automobile, dans laquelle la chaîne cinématique (2) présente un réservoir d'huile (1) pour le refroidissement et/ou la lubrification de paliers (15, 16, 17), un arbre d'entraînement (3), une transmission (4) comportant une première roue dentée (4c), une deuxième roue dentée (4a) et une troisième roue dentée (4b), un différentiel (5), au moins un arbre d'entraînement de roue (6, 7) et un boîtier (12), dans laquelle le différentiel (5) présente une roue dentée d'entraînement d'essieu (5a) et la roue dentée d'entraînement d'essieu (5a) est en prise avec une première roue dentée (4c) de la transmission (4), dans laquelle au moins une zone de carter d'huile (9) est réalisé dans la zone inférieure du boîtier (12), dans laquelle la roue dentée d'entraînement d'essieu (5a) et/ou la deuxième roue dentée (4a) de la transmission (4) sont disposées immergées au moins partiellement dans la zone de carter d'huile (9), dans laquelle les roues dentées (4a, 4b, 4c) de la transmission (4) et la roue dentée d'entraînement d'essieu (5a) réalisent au moins deux étages (I, II) de roues dentées et deux roues dentées (4b, 4c) de la transmission (4) sont disposées sur un arbre intermédiaire (8) et dans laquelle l'au moins un arbre d'entraînement de roue (6, 7) est disposé coaxial à l'arbre d'entraînement (3) et l'arbre intermédiaire (8) de la transmission (4) est disposé sur le côté de l'arbre d'entraînement (3) et/ou de l'au moins un arbre d'entraînement de roue (6, 7) opposé à la zone de carter d'huile (9), **caractérisée en ce que** le réservoir d'huile (1) est disposé de manière fonctionnelle en sorte que le réservoir d'huile (1) est disposé dans la zone entre les deux étages (I, II) de roues dentées et sur le côté de l'arbre d'entraînement (3) et/ou de l'au moins un arbre d'entraînement de roue (6, 7) opposé à la zone de carter d'huile (9) et dans laquelle l'axe longitudinal (A) du réservoir d'huile (1) s'étend parallèlement aux plans respectifs déterminés par les diamètres respectifs de la première roue dentée (4c) de la transmission (4) et de la roue dentée d'entraînement d'essieu (5a) d'une part et des deuxième et troisième roues dentées (4a, 4b) d'autre part.

2. Chaîne cinématique (2) selon la revendication 1, **caractérisée en ce que** le réservoir d'huile (1) présente un espace intérieur (1a) pouvant être rempli d'huile et une zone d'entrée d'huile (1b), dans laquelle la zone d'entrée d'huile (1b) est positionnée et/ou réalisée en sorte que de l'huile peut être transportée par la roue dentée d'entraînement d'essieu (5a) en rotation depuis la zone de carter d'huile (9) dans la zone d'entrée d'huile (1b), en particulier la zone d'entrée d'huile (1b) présente une fenêtre d'entrée d'huile (10) et une zone de réception d'huile (11) réalisée de manière bombée.

3. Chaîne cinématique (2) selon l'une des revendications 1 à 2, **caractérisée en ce que** le réservoir d'huile (1) présente au moins une première zone de sortie d'huile (1c), dans laquelle la première zone de sortie d'huile (1c) est positionnée et/ou réalisée de telle sorte que d'une part de l'huile peut être extraite de l'espace interne (1a) du réservoir d'huile (1) et - pour la poursuite du transport - être transférée à une roue dentée (4b, 4c) disposée sur l'arbre intermédiaire (8), en particulier la première zone de sortie d'huile (1c) présente une fenêtre de sortie d'huile (13) et une zone de guidage d'huile (14) réalisée de manière partiellement bombée et/ou en forme de rampe.

4. Chaîne cinématique (2) selon l'une des revendications 1 à 3, **caractérisée en ce que** le réservoir d'huile (1) présente plusieurs zones de sortie d'huile (1d, 1e, 1f), à l'aide desquelles les paliers (15, 16, 17) de la chaîne cinématique (2) et/ou plusieurs canaux d'écoulement (18) menant aux paliers (15, 16, 17) peuvent être alimentés en huile.

5. Chaîne cinématique (2) selon l'une des revendications 1 à 4, **caractérisée en ce que** l'arbre d'entraînement (3) de la chaîne cinématique (2) est montée à l'aide d'un premier et d'un deuxième paliers (15, 16) espacés axialement l'un de l'autre, dans laquelle le réservoir d'huile (1) présente, pour l'alimentation de ces paliers (15, 16) une deuxième et une troisième zone de sortie d'huile (1d et 1e).

6. Chaîne cinématique (2) selon l'une des revendications 1 à 5, **caractérisée en ce qu'**un flasque (19) est disposé entre le différentiel (5) ou la roue dentée d'entraînement d'essieu (5a) du différentiel (5) et une partie de boîtier (12a) recevant un moteur d'entraînement (20) pour le montage du différentiel (5), dans laquelle le flasque (19) présente une zone aplatie (19a), sur laquelle le réservoir d'huile (1) est disposé.

7. Chaîne cinématique (2) selon la revendication 6, **caractérisée en ce que** le réservoir d'huile (1) présente une quatrième zone de sortie d'huile (1f), à l'aide de laquelle un troisième palier (17) disposé dans une réception de palier du flasque (19) peut être alimenté en huile, en particulier la quatrième zone de sortie d'huile (1f) présente une ouverture de sortie d'huile, qui est en liaison d'écoulement avec une zone d'alimentation du flasque (19) réalisée en particulier partiellement en forme de rampe.

8. Chaîne cinématique (2) selon la revendication 5, **caractérisée en ce que** le boîtier (12) présente des canaux d'écoulement (18) pour l'alimentation des premier et deuxième paliers (15, 16), qui peuvent être alimentés en huile à l'aide des deuxième et troisième zones de sortie d'huile (1d et 1e).

9. Chaîne cinématique (2) selon les revendications 3, 4 avec 7, **caractérisée en ce que** la première, la deuxième et la troisième zone de sortie d'huile (1c, 1d, 1e) sont disposées et/ou réalisées sur le même côté du réservoir d'huile (1), dans laquelle la zone d'entrée d'huile (1b) est disposée et/ou réalisée sur le côté du réservoir d'huile (1) opposé à celui-ci et dans laquelle la quatrième zone de sortie d'huile (1f) est réalisée sur le côté inférieur du réservoir d'huile (1).
